# EUROPEAN PATENT SPECIFICATION

(11) **EP 4 051 489 B1**
(45) Date of publication and mention of the grant of the patent: **28.05.2025**
(21) Application number: 20771235.7
(22) Date of filing: 04.09.2020
(51) Int. Cl.: B29C 65/02, B29C 65/08, B29C 65/16, B29C 65/74, B29C 65/78, D05B 23/00, D05B 35/06, D05B 35/10, B29C 65/04, B29C 65/10, B29C 65/18, B29C 65/62

(54) **METHOD AND APPARATUS FOR EDGE BINDING OF TEXTILE PRODUCTS**
VERFAHREN UND VORRICHTUNG ZUM KANTENBINDEN VON TEXTILEN PRODUKTEN
PROCÉDÉ ET APPAREIL DE BORDAGE DE PRODUITS TEXTILES

(30) Priority: 31.10.2019 SE 1951245
(43) Date of publication of application: 07.09.2022
(73) Proprietor: ACG Kinna Automatic AB, 511 62 Skene (SE)
(72) Inventor: LARSSON, Magnus, 51996 Fotskäl (SE); NILSSON, Magnus, 51174 Skephult (SE)
(74) Representative: Neij & Lindberg AB
(86) International application number: PCT/EP2020/074822
(87) International publication number: WO 2021/083570

(56) References cited:
- DE-A1- 3 912 275
- US-A- 4 949 658
- US-A- 5 394 813
- US-A1- 2004 060 496
- US-A1- 2008 184 922

## Description

### Technical Field

The present disclosure relates generally to manufacture of textile products, and, more particularly, to a method and apparatus for providing textile products with an edge binding.

### Background

In production of textile products, it is desirable that the products be formed with edges that are not likely to fray or otherwise deteriorate with use, and so that the edges remain attractive during use. Some products are folded at their edges to form hems, which are sewn closed to hide the cut or ragged edge of the product. Other products are instead provided with overedge stitches along the perimeter. For increased durability and to allow for variations in material or colouring, it is also known to apply a binding tape to the edge of the textile product, known in the art as "edge binding". The binding tape is a long strip of fabric, which is folded and typically sewn onto the edge.

Edge binding of textile products may be performed on a sewing machine by manual labour. The general consensus on edge binding is that a high throughput and quality is achieved by applying the binding tape to extend continuously around the entire perimeter of the textile product. To achieve such a continuous edge binding, the textile product is conventionally manufactured with rounded corners. An example of a sewing machine for edge binding by manual operation is disclosed in US6044783, in which the sewing machine is configured to automatically finish the textile product when the binding tape has been attached along the entire perimeter of the textile product, by folding the trailing end of the binding tape and attaching it to the leading end of the binding tape.

To reduce costs and achieve a more consistent quality of the finished textile products, it is desirable to automate production. US4688499 discloses a representative example of such automated production, in which the textile product is rotated on a working table while the binding tape is applied by an edge binding device comprising a stationary sewing machine and a tape positioning mechanism. It is realized that the size of the working table will scale with the size of the textile product, making it difficult to adapt the production equipment to textile products of different sizes and/or types. The need to rotate the textile product may also limit production rate and increase the complexity of the production equipment.

The prior art also comprises US2008/0184922 which discloses a rug sewing apparatus that is operable to trim the edges of a work piece, for example into one or more square corners, apply a binding tape to the edges, stitch the binding tape to the work piece, remove any excess binding tape along the one or more corners of the work piece, and seal the corners. The latter steps require high-accuracy positioning of the work piece in relation to the rug sewing machine, which increases the required complexity of the production equipment and may be difficult to achieve at high production rates.

### Summary

It is an objective of the present disclosure to at least partly overcome one or more limitations of the prior art.

A further objective is to increase the production rate of textile products with edge binding.

A yet further objective is to facilitate automated edge binding of textile products.

Another objective is to achieve a high quality finish of the resulting textile products.

One or more of these objectives, as well as further objectives that may appear from the description below, are at least partly achieved by an apparatus, a method, a computer-readable medium and a textile product in accordance with the independent claims, embodiments being defined by the dependent claims.

A first aspect is an apparatus for edge binding a textile work product that has a perimeter comprising first and second edges that meet at a corner at approximately right angles, a binding tape being folded around and attached to the second edge so that an end portion of the binding tape projects beyond the corner in a direction of the second edge. The apparatus comprises a corner finishing device and a conveyor for engagement with the textile work product, and a control device operatively connected to the conveyor and the corner finishing device. The control device is configured to: operate at least one of the conveyor and the corner finishing device to arrange the textile work product with the corner in alignment with the corner finishing device; and operate the corner finishing device to apply a heat seal to the end portion at the corner and cut the end portion at the heat seal to close the binding tape at the corner. The corner finishing device comprises a heat sealing unit which is operable to form a slot with a height that is smaller than a thickness of the binding tape on the second edge, and the control device is configured to, before operating the corner finishing device to apply the heat seal, operate at least one of the conveyor and the corner finishing device to arrange the end portion to extend through the heat sealing unit, operate the heat sealing unit to form the slot with the end portion extending through the slot, and operate the corner finishing device to pull the end portion through the slot in a first direction to thereby drive the corner towards, and optionally into contact with, the slot.

In some embodiments, the control device comprises a software-controlled processor which is connected, via an output interface on the control device, to the conveyor and the corner finishing device and is configured to generate control signals for controlling the operation of the conveyor and the corner finishing device.

In some embodiments, the corner finishing device comprises a gripping unit for engaging the end portion.

In some embodiments, the control device is configured to operate, when the gripping unit is engaged with the end portion, at least one of the gripping unit and the heat sealing unit to pull the end portion in the first direction.

In some embodiments, the corner finishing device comprises a cutting unit integrated with the heat sealing unit, and the control device is configured to operate the corner finishing device to concurrently apply the heat seal by the heat sealing unit and to cut the end portion by the cutting unit.

In some embodiments, the corner finishing device comprises first and second opposing blocks that define a cutting element and a stop for the cutting element, respectively, the first and second blocks being arranged for mutual movement, and the control device is further configured to operate an actuator to mutually move the first and second blocks to form the slot between the cutting element and the stop.

In some embodiments, the cutting element and the stop are arranged to extend in a second direction at right angles to the first direction, and the control device is configured to operate at least one of the conveyor and the corner finishing device to arrange the textile work product with the second edge substantially parallel to the first direction and the first edge substantially extending along the cutting element and the stop in the second direction.

In some embodiments, the first and second blocks comprise opposing surface portions that collectively define a heat sealing region between the first and second blocks, said first and second blocks being arranged with the opposing surface portions jointly defining a tapered space when the first and second blocks have been moved to form the slot between the cutting element and the stop, and the corner is received in the tapered space when the corner is driven towards the slot.

In some embodiments, the cutting element and the stop are located in or adjacent to the heat sealing region defined by the opposing surface portions.

In some embodiments, the cutting element is defined by a ridge in a top surface of the first block facing the second block, the top surface comprising one of said opposing surface portions, which is arranged with a first angle to an alignment plane of the first and second blocks and extends from the ridge towards a front surface of the first block facing the textile work product, the top surface further comprising a rearward surface portion which extends from the ridge and faces away from the front surface, said rearward surface portion being arranged with a second angle to the alignment plane, the second angle being smaller than the first angle.

In some embodiments, the control device is further configured to, after operating the corner finishing device to pull the end portion in the first direction, operate the heat sealing unit to relatively move the first and second blocks into pressing engagement with the end portion and operate an energy source to provide energy to at least one of the first and second blocks to apply the heat seal to the end portion.

In some embodiments, the energy source comprises an ultrasonic generator unit.

In some embodiments, the apparatus further comprises a position sensor which is fixedly connected to the corner finishing device and arranged to detect the first edge, and the control device is configured to operate said at least one of the conveyor and the corner finishing device to arrange the textile work product adjacent to the corner finishing device based on a sensor signal from the position sensor.

In some embodiments, said conveyor comprises an elongated moveable element which is configured to engage the textile work product while extending parallel to and being spaced from the second edge.

In some embodiments, the textile work product further comprising a third edge that meets the second edge at a further corner at substantially right angles, the binding tape being attached to the second edge so that a further end portion of the binding tape projects beyond the further corner in a direction of the second edge, said apparatus further comprising a further corner finishing device, wherein the control device is operatively connected to the further corner finishing device and is configured to, while operating said at least one of the conveyor and the corner finishing device to arrange the textile work product with the corner in alignment with the corner finishing device, operate said at least one of the conveyor and the further corner finishing device to arrange the textile work product with the further corner in alignment with the further corner finishing device, and operate the further corner finishing device to apply a further heat seal to the further end portion at the further corner and cut the further end portion at the further heat seal to close the binding tape at the further corner.

In some embodiments, the corner finishing device is configured to apply the heat seal by ultrasonic welding.

In some embodiments, the apparatus further comprises an edge binding device, and the control device is configured to operate the edge binding device to attach the binding tape to the second edge so that the end portion of the binding tape projects beyond the corner in the direction of the second edge.

In some embodiments, the control device is further configured to, before operating the edge binding device to attach the binding tape to the second edge, operate the edge binding device, or a further edge binding device, to attach a further binding tape to the first edge so that an end portion of the further binding tape is level with the corner in a direction of the first edge.

A second aspect is a method of edge binding a textile work product having a perimeter comprising first and second edges that meet at a corner at approximately right angles, a binding tape being folded around and attached to the second edge so that an end portion of the binding tape projects beyond the corner in a direction of the second edge. The method comprises: arranging the textile work product with the corner in alignment with a corner finishing device; and operating the corner finishing device to apply a heat seal to the end portion at the corner and cut the end portion at the heat seal to close the binding tape at the corner. The arranging comprises: arranging the end portion to extend through a heat sealing unit of the corner finishing device; operating the heat sealing unit to form a slot with the end portion extending through the slot, a height of said slot being smaller than a thickness of the binding tape on the second edge; and pulling the end portion through the slot in a first direction to thereby drive the corner towards, and optionally into contact with, the slot.

In some embodiments, said pulling comprises: operating a gripping unit to engage the end portion, and operating at least one of the gripping unit and the heat sealing unit to pull the end portion in the first direction.

In some embodiments, the corner finishing device comprises a cutting unit integrated with the heat sealing unit, and said operating the corner finishing device to apply the heat seal comprises: operating the corner finishing device to concurrently apply the heat seal by the heat sealing unit and cut the end portion by the cutting unit.

In some embodiments, the corner finishing device comprises first and second opposing blocks that are mutually moveable and define a cutting element and a stop for the cutting element, respectively, and said operating the heat sealing unit to form the slot comprises: mutually moving the first and second blocks to form the slot between the cutting element and the stop.

In some embodiments, the cutting element and the stop are arranged to extend in a second direction at right angles to the first direction, and said arranging the textile work product comprises: arranging the textile work product with the second edge substantially parallel to the first direction and the first edge substantially extending along the cutting element and the stop in the second direction.

In some embodiments, the first and second blocks comprise opposing surface portions that collectively define a heat sealing region between the first and second blocks, and said operating the heat sealing unit to form the slot causes the opposing surface portions to jointly define a tapered space, and said pulling the end portion in the first direction causes the corner to be received in the tapered space.

In some embodiments, said operating the corner finishing device to apply the heat seal comprises: operating the heat sealing unit to relatively move the first and second blocks into pressing engagement with the end portion and operating an energy source to provide energy to at least one of the first and second blocks to apply the heat seal to the end portion.

In some embodiments, said arranging the textile work product with the corner in alignment with the corner finishing device is at least partly based on a sensor signal from a position sensor which is fixedly connected to the corner finishing device and arranged to detect the first edge.

In some embodiments, said arranging the textile work product with the corner in alignment comprises: moving an elongated element, which is engaged with the textile work product in parallel to and spaced from the second edge.

In some embodiments, the textile work product further comprises a third edge that meets the second edge at further corner at approximately right angles, the binding tape being attached to the second edge so that a further end portion of the binding tape projects beyond the further corner in a direction of the second edge, the method further comprising: concurrent with said arranging the textile work product with the corner in alignment with the corner finishing device, arranging the textile work product with the further corner in alignment with a further corner finishing device, and the method further comprising: operating the further corner finishing device to apply a further heat seal to the further end portion at the further corner and cut the further end portion at the further heat seal to close the binding tape at the further corner.

In some embodiments, the corner finishing device is operated to apply the heat seal by ultrasonic welding.

In some embodiments, the method further comprises: operating an edge binding device to attach the binding tape to the second edge so that the end portion of the binding tape projects beyond the corner in the direction of the second edge.

In some embodiments, the method further comprises, before said operating the edge binding device to attach the binding tape to the second edge, operating the edge binding device to attach a further binding tape to the first edge so that an end portion of the further binding tape is level with the corner in a direction of the first edge.

Still other objectives, as well as features, embodiments, aspects and technical effects will appear from the following detailed description, the attached claims and the drawings.

### Brief Description of Drawings

Embodiments will now be described in more detail with reference to the accompanying schematic drawings.
FIG. 1 is a top plan view of a conventional textile product with continuous edge binding.
FIG. 2 is a block diagram of stations included in a production plant for manufacture of a textile product with edge binding.
FIGS 3A-3G show an example of production steps performed during manufacture of a textile product.
FIG. 4 is a flow chart of an example control method for an edge binding station.
FIG. 5A is a top plan view of an example corner finishing device, and FIGS 5B-5C are side views of the corner finishing device during the control method of FIG. 4.
FIG. 6 is a flow chart of a control method for finishing corners in an edge binding station in accordance with an embodiment.
FIGS 7A-7E are side views of a corner finishing device during the control method of FIG. 6, and FIG. 7F is a top plan view corresponding to FIG. 7D.
FIGS 8A-8B are perspective and side views, respectively, of a pair of cooperating blocks in a corner finishing device in accordance with an embodiment.
FIG. 9 is a block diagram of a control system of a corner finishing device.
FIGS 10A-10B are perspective views of part of a corner finishing device in accordance with an embodiment, FIGS 10C-10E are side views of the corner finishing device in different operational states, FIG. 10F is an overall perspective view of the corner finishing device, and FIG. 10G is a top plan view of a station with four corner finishing devices.
FIG. 11 is a schematic block diagram of a control device in accordance with an embodiment.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure. As used herein, the term "and/or" includes any and all combinations of one or more of the associated listed items.

The present disclosure relates to techniques for improving production of textile products with edge binding, for example with respect to production rate, production cost or product quality. As used herein, a "textile product" is a product comprising any textile material (e.g., fabric), or a combination of textile materials, each comprising a network of natural or artificial fibers. The respective textile material may be formed by, e.g., weaving, knitting, crocheting, knotting, tatting, felting or braiding. Non-limiting examples of textile products include household textiles, such as mattress covers, bedspreads, bed sheets, quilted textiles, placemats, pillows, throw rugs, seat cushions, towels, pot-holders, curtains, draperies, etc., as well as technical textiles, such as filters, geotextiles, agrotextiles, industrial textiles, etc. It is also conceivable that the textile product with the edge binding is subject to further processing, for example for inclusion in an aggregated product such as a pillowcase, a mattress, etc.

Further, as used herein, a "textile work product" designates any intermediate product which is formed during manufacture of the textile product and onto which the edge binding is provided.

As used herein, "edge binding" has its conventional meaning of designating a process of attaching a protective tape or strip ("binding tape") onto the perimeter, or a portion thereof, of a textile work product. The term edge binding may also refer to the binding tape as attached to the textile work product. The binding tape as attached is also denoted "tape-edge" in the art. The binding tape may comprise a textile material, or a combination of textile materials. For example, the binding tape may comprise a knit or woven textile material. In some embodiments, the binding tape is configured to enable heat sealing, at least onto itself. For example, such a binding tape may be pliable or moldable at elevated temperature and may solidify upon cooling to room temperature. In some embodiments, the binding tape may comprise at least one thermoplastic substance. For example, the thermoplastic substance(s) may be dispersed within the binding tape or be provided in one or more layers on the binding tape.

As used herein, "heat sealing" designates a process of applying heat, and optionally pressure, onto two or more elements to fuse or join the elements. Heat sealing is also known as welding or thermal fusion. Heat sealing results in a heat seal or weld between the elements, at which at least one of the elements is melted and fused with the other element(s).

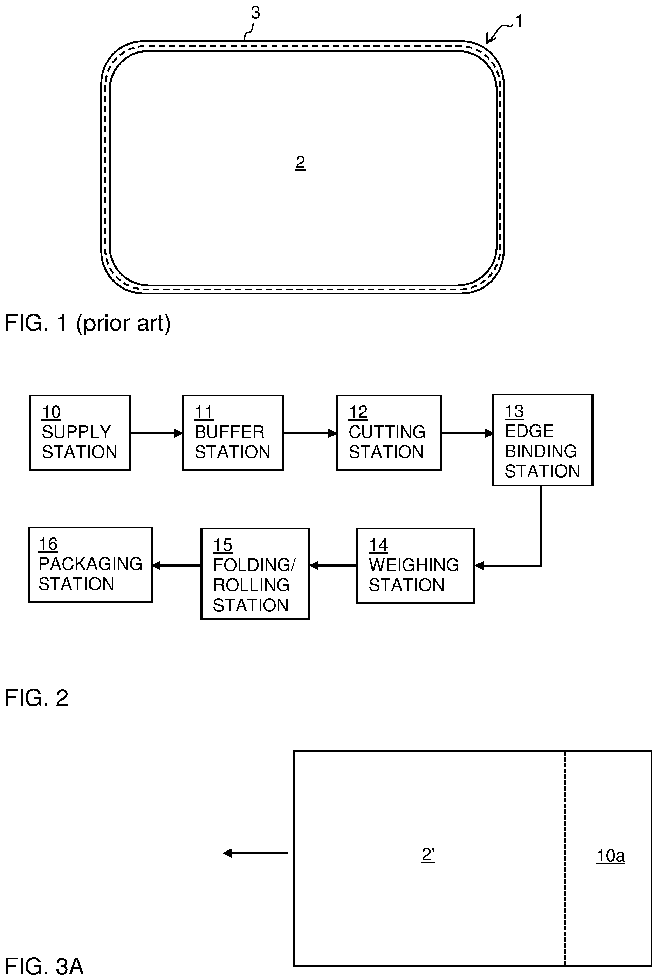

FIG. 1 is a top plan view of a textile product 1, which has been provided with an edge binding in conventional manner. The textile product 1 comprises a textile work product 2, which has a perimeter with rounded corners. A binding tape 3 has been folded over and attached to the edge of the textile work product 2 to extend continuously along the entire perimeter. The tape 3 may be attached by any conventional technique, such as conventional sewing, laser sewing, seam welding, gluing, etc. In FIG. 1, as well as other drawings herein, the attachment of the binding tape 3 is represented by a dashed line extending along the tape 3.

Embodiments of the present invention are based on the insight that the production rate in automated production of textile products with edge binding might be increased by dispensing with the requirement for continuous edge binding and rounded corners, and instead attach individual strips of binding tape to the different edges of the textile work product so that the strips of binding tape overlap at the corners of the textile work product. By attaching individual strips to the edges, the edge binding may be accomplished by purely linear motions of the textile work product and/or the processing equipment, which greatly speeds up production compared to the advanced motion required for producing rounded corners. To ensure an aesthetically appealing edge binding, the attached strips of binding tape should substantially conform to the shape of the respective corner. Further, since the strips of binding tape are folded over the respective edge, one of the strips at each corner will be open. This may be undesirable for a number of different reasons, including accumulation of dirt, reduced durability, reduced stability, and lack of customer acceptance. Embodiments are based on the further insight that the open ends of the respective strip may be closed in a simple and durable manner by, e.g., heat sealing.

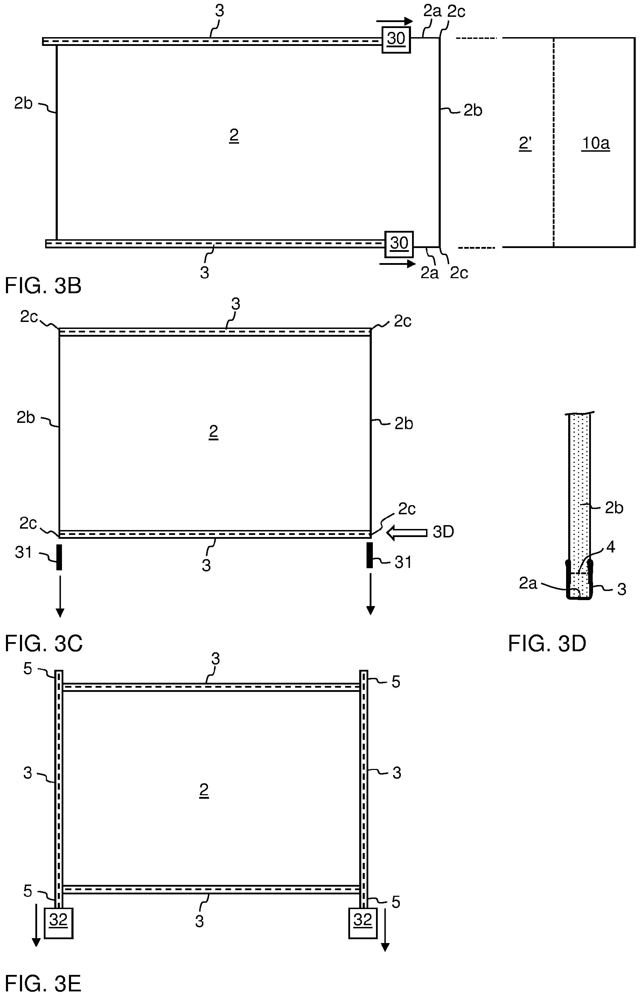

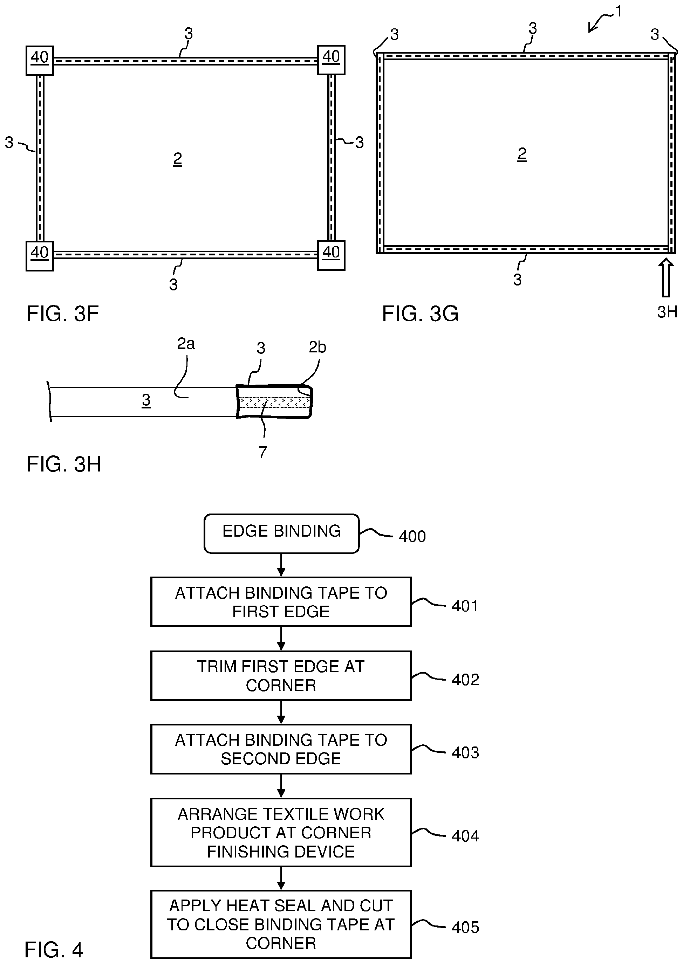

In the following, embodiments will be described with reference to a schematic example of a production line for manufacturing a textile product 1 with edge binding, shown in FIG. 2. The production line comprises a sequence of stations 10-16, which may be arranged in one factory or distributed among different factories. Some of the production steps performed by the stations are further exemplified in FIGS 3A-3H. The supply station 10 is configured to provide a continuous web 2' of raw material for the production of the textile product 1. The raw material may be a sheet material, which may or may not be pre-processed and may or may not comprise a combination of textile materials. FIG. 3A is a top plan view of such a continuous web 2' being fed from a supply 10A, for example a roll or a bundle. A buffer station 11 is arranged intermediate the supply station 10 and the cutting station 12 and is operable to accumulate the web 2' while it is being cut in the cutting station 12. The buffer station 11 thus forms a buffer between the continuous feed from the supply station 10 and the intermittent cutting operation in the cutting station 12. The top plan view of FIG. 3B illustrates a textile work product 2 which has been separated from the web 2' in the cutting station 12. In the illustrated example, the textile work product 2 is substantially rectangular and comprises two opposing long edges 2a ("longitudinal edges") and two opposing short edges 2b ("lateral edges"). In accordance with an embodiment, the edge binding station 13 is configured to apply a respective binding tape to the edges 2a, 2b and trim and seal the binding tapes 3 where they meet at the corners 2c. FIG. 3B illustrates a first processing stage in station 13, at which a binding tape 3 is folded around and attached to the respective long edge 2a by a binding device 30 ("edge binding device") which is moved along the respective long edge 2a. The binding device 30 may, for example, include a sewing machine that provides a seam of stiches along the respective tape 3. FIG. 3C illustrates a second processing stage in station 13, at which the short edges 2b are trimmed by a cutting or trimming device 31 which is moved along the respective short edge 2b to ensure that the ends of the tape 3 are substantially level with the edges 2b. The trimming device 31 may be of any conventional type, e.g., including one or more of a drag knife, a tangential knife, a rotary knife, a wheel knife, an oscillating/reciprocating knife, a laser cutter, etc. Depending on implementation, the trimming device 31 may also cut off a portion of the textile work product 2 to form new short edges 2b. After completion of the second stage, the long and short edges 2a, 2b meet at the corners 2c at substantially right angles, subject to manufacturing tolerances which, e.g., may be ±10° or less, ±5° or less, or ±1° or less. FIG. 3D is a side view taken in direction 3D in FIG. 3C. As seen, the tape 3 is folded around the edge 2a into a generally U-shaped configuration and attached on opposing sides of the textile work product 2, in this example by a seam 4. In the illustrated example, the edges of the tape 3 are further turned under ("hemmed") before attachment to prevent fraying. FIG. 3E illustrates a third processing stage in station 13, at which a binding tape 3 is folded around and attached to the respective short edge 2b by a binding device 32 ("edge binding device") which is moved along the respective short edge 2b. The binding device 32 may be similar to the binding device 30. After completion of the third stage, as shown in FIG. 3E, end portions 5 ("projecting ends") of the binding tape 3 on the short edges 2b project beyond the corners. FIG. 3F illustrates a fourth processing stage in station 13, at which the respective corner is aligned with a corner processing device 40, denoted "corner finishing device" in the following, which is configured to apply a heat seal to the respective projecting end 5 and cut the projecting end at the heat seal to close and finish the binding tape 3 at the respective corner. FIG. 3G is a top plan view of the textile product 1 after completion of the processing in station 13. As seen, the attached strips of binding tape 3 overlap and meet substantially at right angles at the corners. FIG. 3H is a side view taken in direction 3H in FIG. 3G and shows that the binding tape 3 that is folded onto the short edge 2b has been closed by a heat seal 7 where this binding tape 3 meets the long edge 2a, i.e. at the corner. Thus, as used herein, a binding tape being closed "at the corner" of the textile work product designates a binding tape that is folded and attached along a first edge of the textile work product and extends to a corner where first edge meets a second edge of the textile work product, the binding tape being closed from the corner and over the extent of the binding tape along the second edge. As seen in top view, FIG. 3G, the overlapping binding tapes are finished to form a substantially right-angled corner of the textile product 1. This is achieved by ensuring that the heat seal 7 is located substantially flush with the binding tape 3 that is attached to the long edge 2a. In this context, "substantially flush" infers that the heat seal 7 projects less than about 2 mm, and preferably less than about 1 mm.

Reverting to the example of the production line in FIG. 2, the textile product 1 is received by a weighing station 14, which is configured to determine the weight of the textile product 1 for quality assessment. If the weight is within acceptable limits, the textile product 1 is conveyed to a folding or rolling station 15, which is configured to fold and/or roll up the textile product 1, assuming that the textile product is so large that this is necessary. The folded/rolled textile product is then conveyed to a packaging station 15, which is configured to apply a wrapping onto one or more textile products and/or arrange one or more textile products in an external packaging, such as a bag or carton.

It should be emphasized that FIGS 2-3 are merely presented as an example and are in no way intended to be limiting. Any of the stations 10-12, 14-16 upstream and downstream of the edge binding station 13 may be omitted. Further, the edge binding station 13 may be configured to first attach the binding tape to the short side 2b and then to the long side 2a. Of course, the textile product may also be produced with all edges of equal length. It is also conceivable that the binding tape is only applied onto one of the two edges that meet in a corner. For example, the textile product may be produced with edge binding only on the long edges 2a or the short edges 2b, or even on one edge only. In these variants, the heat seal 7 should be located substantially flush with the edge that meets the edge with the binding tape at the corner.

In the example of FIG. 3, the binding devices 30, 32 and the trimming devices 31 are moved in relation to the textile work product 2, which is immobilized during the respective processing stage. In an alternative, the textile work product 2 is moved during one or more of these processing stages, e.g., in relation to one or more of the binding devices 30, 32 and trimming devices 31. Any number of binding devices 30, 32 and trimming devices 32 may be operated on the textile work product 2. To increase production speed, it may be preferable to concurrently operate two binding devices 30, 32, two trimming devices 31, and four corner finishing devices 40 on the textile work product 2, as indicated in FIG. 3.

FIG. 4 is a flow chart of an example control method 400 for operating the edge binding station 13. The method 400 may be performed by a control device ("controller") of the edge binding station 13. The method 400 will be presented with reference to the example in FIG. 3. In step 401, the binding device 30 is operated to fold and attach a first binding tape 3 to a first edge of the textile work product 2. The first edge may be a long edge 2a as shown in FIG. 3B, or a short edge 2b. In step 402, the trimming device 31 is operated to trim the first binding tape 3 at the corner where the first edge meets a second edge of the textile work product, and possibly also trim the second edge, for example as shown in FIG. 3C. In step 403, the binding device 32 is operated to fold and attach a second binding tape 3 to the second edge, for example as shown in FIG. 3E. In step 404, the textile work product 2 is arranged with its corner in alignment with the corner finishing device 40, for example as shown in FIG. 3F. In step 405, the corner finishing device 40 is operated to apply a heat seal 7 to the projecting end 5 of the second binding tape 3 at the corner and cut away the projecting end 5 at the heat seal, to thereby close and finish the end of the second binding tape 3 at the corner.

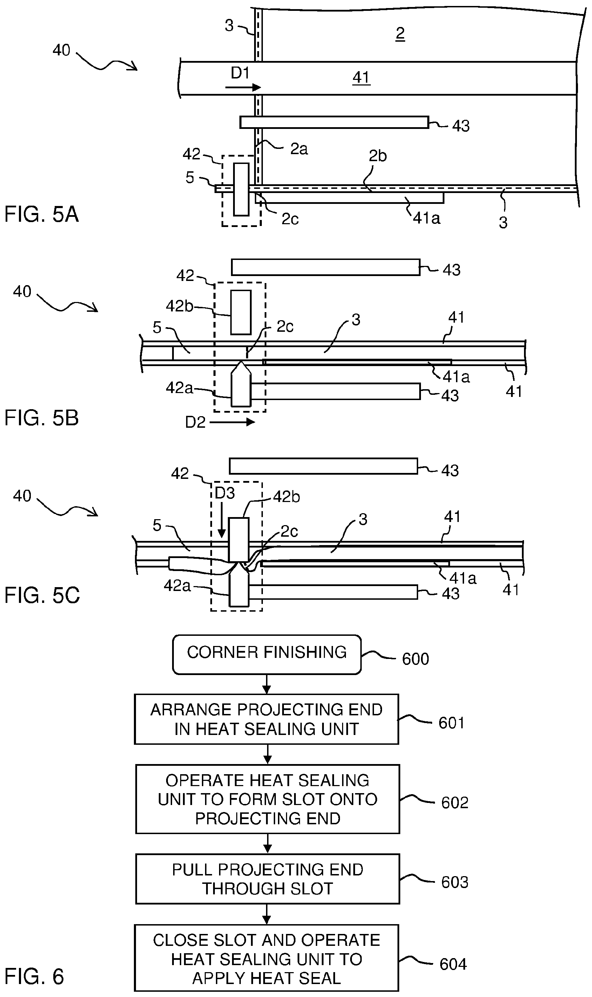

FIGS 5A-5C depict an example of the corner finishing device 40 during steps 404-405. FIG. 5A is a top plan view during step 404, and FIGS 5B-5C are elevated side views during step 404 and step 405, respectively. In the illustrated example, the textile work product 2 is arranged between two overlapping conveyor belts 41, which have been operated to transport the textile work product 2 in an infeed direction D1 to the corner finishing device 40 in FIG. 5A. Although the following description refers to the conveyor belts, it should be understood that the any suitable transportation system, generally denoted "conveyor" herein, may be implemented for engaging and transporting the textile work product 2, such as belt systems, roll feeders, grip feeders, etc. The corner finishing device 40 comprises a heat sealing unit 42, which is the illustrated example is configured to also operate as a cutting unit. A support 41a is arranged in vertical alignment with the heat sealing unit 42 to provide a planar support surface for the textile work product 2, or at least the second edge with the binding tape 3 to be heat sealed. A position sensor 43 is arranged in registration with the heat sealing unit 42 to sense the perimeter of the binding tape 3 on the first edge and thereby the location of the corner 2c between the first and second edges. In the illustrated example, the position sensor 43 is elongated and arranged to extend parallel to the infeed direction D1. In this example, the position sensor 43 comprises an upper and a lower part, which are arranged on opposite sides of the textile work product 2. The position sensor 43 is preferably non-contacting and may be of any suitable type, e.g. optical, inductive, magnetostrictive, hall effect, etc. The heat sealing unit 42 is moveable in a direction D2 parallel to the infeed direction D1 (FIG. 5B). The heat sealing unit 42 comprises two opposing blocks 42a, 42b which are relatively moveable in a vertical direction D3. Thereby, the heat sealing unit 42 is operable in an infeed state, in which the blocks 42a, 42b define a gap for receiving the projecting end 5 (FIGS 5A-5B), and a sealing state, in which the blocks 42a, 42b close the gap around the projecting end 5 (FIG. 5C). In the sealing state, the heat sealing unit 42 is operated to supply energy to at least one of the blocks 42a, 42b to form the heat seal in the binding tape 5 at the corner 2c. In the illustrated example, the heat sealing unit 42 is configured to form the heat seal by ultrasonic welding. Further, as shown, the top surface of block 42a comprises a ridge which is configured to cut the binding tape 3 in the second sealing state, i.e. concurrent with the heat sealing. Although not shown in FIGS 5A-5C, the ridge is arranged to extend perpendicular to the infeed direction D1. Thus, in the illustrated example, blocks 42a, 42b have the function of a cutting element ("knife") and a stop ("opposing support") for the cutting element, respectively.

During execution of the control method 400 of FIG. 4, the textile work product 2 is first transported by the conveyor belts 41 into the position in FIG. 5A with the heat sealing unit 42 in the infeed state (step 404). Then, when the textile work product 2 is immobilized, the heat sealing unit 42 is first moved in direction D2 based on a position signal from the sensor 43, to align the corner 2c with the heat sealing unit 42, as shown in FIG. 5B (step 404). After fixing the heat sealing unit 42 in alignment with the corner 2c, the heat sealing unit 42 is set in the sealing state to form the heat seal and cut away the projecting end 5, as shown in FIG. 5C (step 405). The positional adjustment of the heat sealing unit in direction D2 is optional, but will relax the requirement on the positional accuracy of the conveyor belts 1 when transporting the textile work product to the heat sealing unit 42.

Generally, the heat sealing unit 42 may be configured to implement any suitable heat sealing technique, including but not limited to ultrasonic welding, hot air welding, hot wedge welding, RF welding, and laser welding. In an alternative to the example in FIG. 5, the cutting operation may alternatively be performed by a separate cutting unit subsequent to the heat sealing. In the example of FIG. 5C, the lower block 42a is stationary and the upper block 42b is moveable. In other variants, the lower block 42a is moveable and the upper block 42b is either moveable or stationary. Further, the ridge may instead be provided on the upper block 42b, or on both blocks 42a, 42b.

The present applicant has identified an opportunity to further improve production by relaxing the need for precise positioning of the heat sealing unit 42 relative to the textile work product 2. Such relaxation could be converted into a reduced cost and/or complexity of the production equipment, for example the position sensors 43 and drive units for positioning the heat sealing unit 42. The relaxation may also enable increased production rate and/or more consistent quality of the textile products 1. It should also be noted that the textile work products typically are pliable and may be become slightly deformed during processing in the edge binding station 13. Such deformation may reduce the quality of the finished corners.

FIG. 6 is a flow chart of a control method 600 for operating the corner finishing device 40 in accordance with an embodiment that relaxes the need for precise positioning. The method 600 may be performed by a control device ("controller") of the corner finishing device 40. Steps 601-603 correspond to step 404 in FIG. 4 and will be presented with reference to the arrangement of binding tapes shown in FIG. 3. In step 601, the projecting end of the binding tape on the second edge is arranged to extend through the heat sealing unit, which may have the same configuration as the heat sealing unit 42 in FIG. 5. In step 602, the heat sealing unit is operated to form a restriction slot. The restriction slot has a height that is smaller than thickness of the binding tape on the first edge. The height is the lateral extent of the elongated opening defined by the restriction slot, i.e. taken in a direction perpendicular to the longitudinal direction of the opening. Since the projecting end is arranged by step 601 to extend through the heat sealing unit, step 602 will cause the restriction slot to form around a portion of the projecting end, and the corner between the first and second edges is located outside the restriction slot. In step 603, a pulling device is operated to pull the projecting end through the restriction slot to thereby drive the corner towards, and optionally into contact with, the restriction slot. Due to its height, the restriction slot will not permit the corner to pass through the slot. By step 603, the corner will attain a well-defined position in relation to the heat sealing unit. In step 604, which corresponds to step 405 in FIG. 4, the heat sealing unit is operated to close the slot and apply a heat seal to the projecting end and cut away the projecting end at the heat seal, to thereby close and finish the end of the binding tape at the corner. It is realized that steps 602-603 will firmly position the corner in relation to the restriction slot and thereby relax the need to precisely locate the heat sealing unit in relation to the corner in step 601.

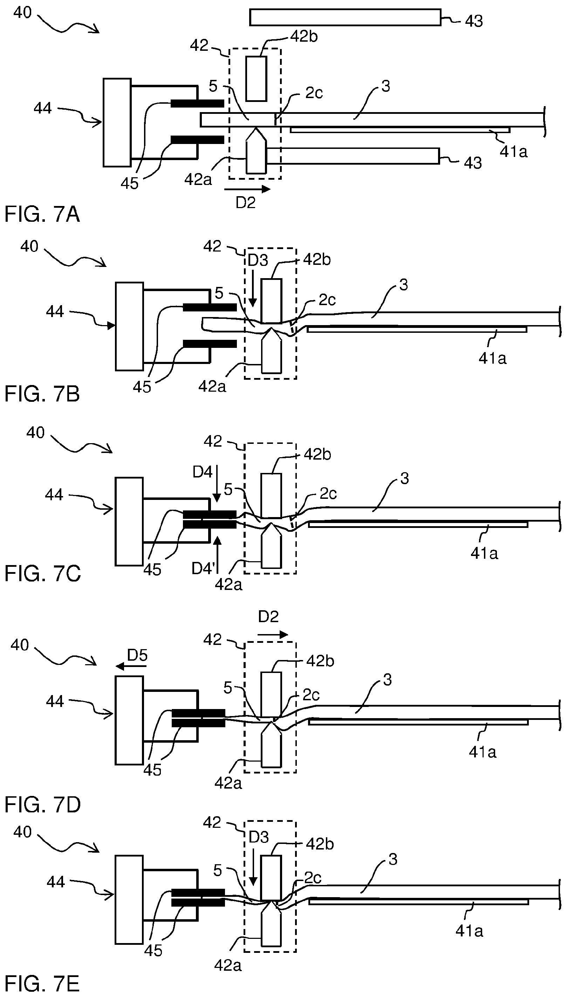

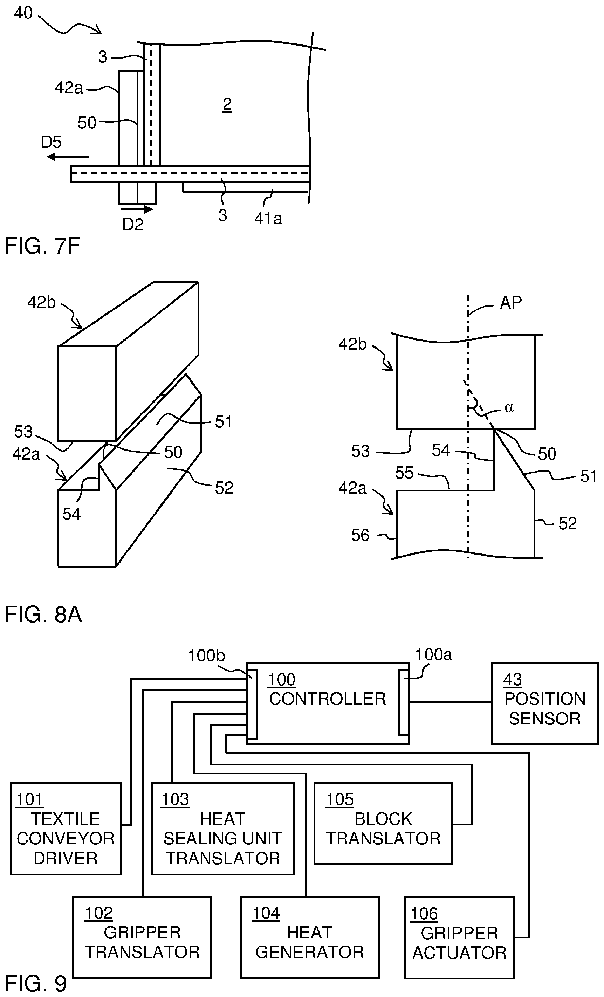

The method 600 will be further exemplified with reference to FIGS 7A-7F which depict a corner finishing device 40 in accordance with an embodiment, FIGS 7A-7E being elevated side views and FIG. 7F being a top plan view. The corner finishing device 40 comprises a support 41a, heat sealing unit 42, and a position sensor 43, which may be arranged as described for the example in FIG. 5. The position sensor 43 is only shown in FIG. 7A. Although not shown in FIGS 7A-7F, conveyor belts are arranged to feed the textile work product 2 into the corner finishing device 40, as described for the example in FIG. 5. The corner finishing device 40 further comprises a gripping unit 44, which comprises a pair of gripping elements 45, in this example configured as plates. The gripping unit 44 is operable in an infeed state, in which the gripping elements 45 are separated, and a gripping state, in which the gripping elements 45 are pressed together. Compared to the example in FIG. 5, the heat sealing unit 42 is operable in an intermediate state, in addition to the infeed state and the sealing state. In the intermediate state, the blocks 42a, 42b are relatively adjusted to form the restriction slot.

In step 601, the conveyor belts are operated to transport the textile work product 2 into the corner finishing device 40 with the heat sealing unit 42 and the gripping unit 44 in the infeed state (FIG. 7A). Also in step 601, when the textile work product 2 is immobilized, the heat sealing unit 42 may be moved in the direction D2 based on the position signal from the sensor 43, to approximately align the corner 2c with the heat sealing unit 42 (FIG. 7A). The translation of the heat sealing unit 42 in direction D2 may relax the requirement for positioning accuracy by the conveyor belts and compensate for small size variations between textile work products 2 and/or deformation of the textile work products 2. In step 602, the heat sealing unit 42 is fixed in position and set in the intermediate state (FIG. 7B). In the example of FIG. 7B, block 42b is thereby moved vertically in direction D3 to define the restriction slot in relation to block 42a. As understood from the foregoing, the distance between the blocks 42a, 42b is smaller than the vertical thickness of the binding tape 3 as attached to the first edge and thereby also smaller than the vertical thickness of the corner 2c. Also in step 602, after or concurrent with setting the heat sealing unit 42 in the intermediate state, the gripping unit 44 is set in the gripping state, to thereby engage the projecting end 5 (FIG. 7C). In the example of FIG. 7C, the gripping elements 45 are moved in opposite directions D4, D4'. As seen in FIG. 7C, the grip on the projecting end 5 is located on the opposite side of the restriction slot compared to the corner 2c. In step 603, as illustrated in FIG. 7D, the gripping unit 44 may be operated to move the griping elements 45 in a direction D5 away from the slot, to thereby pull the projecting end 5 through the slot and drive the corner 2c towards the restriction slot. As seen in FIG. 7D, the blocks 42a, 42b define a tapered space towards the restriction slot from the textile work product, and the corner 2c is guided in this tapered space towards the slot when the projecting end 5 is pulled by the gripping unit 44. As also indicated in FIG. 7D, step 603 may also operate the heat sealing unit 42 to move in the opposite direction D2, away from the gripping elements 45, to displace the slot away from the gripping elements 45. The opposite movements of the gripping elements 45 and the heat sealing unit 42 may be performed concurrently. However, performing the movements in sequence may result in a firmer and more well-defined positioning of the corner 2c in relation to the slot. In a further variant of step 603, the gripping elements 45 are fixed in position and the heat sealing unit 42 is operated to move in the direction D2 to thereby pull the projecting end 5 through the slot. FIG. 7F is a top plan view of the corner finishing device 40 during step 603, with the gripping elements 45 and the block 42b being omitted for clarity of presentation. It should be noted that the pulling action of the projecting end 5 in relation to the restriction slot not only drives the corner into alignment with the slot defined between the blocks 42a, 42b, but also ensures that the second edge is arranged substantially parallel to the slot. To achieve this effect, the directions D2, D5 are preferably substantially parallel to the infeed direction D1 (cf. FIG. 5A). The resulting alignment of the second edge further relaxes the demand for precision in the transportation of the textile work product 2 to the corner finishing device 40. Thus, step 603 may ensure that the subsequent cut through the projecting end 5 is substantially parallel to the second edge and that the corner 2c is substantially right-angled. In this context, "substantially parallel" infers a difference of ±10° or less, ±5° or less, or ±1° or less. In step 604, as shown in FIG. 7E, the heat sealing unit 42 is set in the sealing state to form the heat seal and cut away the projecting end 5, as described above with reference to FIG. 5C.

Generally, the gripping unit 44 may be configured in any suitable way to engage the projecting end 5. For example, other shapes and/or arrangements and/or number of gripping elements 45 may be used. In a further alternative (not shown), the gripping unit 44 may impart the pulling action to the projecting end 5 without physically engaging the projecting end 5, for example by applying a suction force onto the projecting end 5 in direction D5. Thus, the gripping unit 44 may comprise a flow generator operable to generate an air flow through a tubular duct which is arranged to open at the heat sealing unit 42.

FIGS 8A-8B illustrate a configuration of the blocks 42a, 42b of the heat sealing unit 42 in accordance with an embodiment. The blocks 42a, 42b may be included in heat sealing unit 42 of any embodiment described hereinabove and is designed for use with ultrasonic welding. The blocks 42a, 42b are elongated and define "welding surfaces" facing one another. The block 42a forms a cutting element or knife by means of a ridge 50 in its welding surface. A planar surface portion 51 is angled to extend from the ridge 50 to a front surface 52 of the block 42a. The front surface 52 is configured to be arranged facing towards the textile work product in the corner finishing device 40. As seen in FIG. 8B, the planar surface portion 51 is tilted by an angle α in relation to an alignment plane AP for the blocks 42a, 42b. The alignment plane AP is vertical and parallel to the elongated extent of the blocks 42a, 42b. When the heat sealing unit 42 is in the sealing state, as indicated in FIG. 8B, a heat sealing region will be defined in the space between the surface portion 51 and the welding surface 53 of block 42b. The heat sealing region will extend from the ridge 50 towards the front surface 52, the extent being given by the supplied amount of energy in relation to the local distance between the surface portion 51 and the surface 53, which is planar in this example. Thus, the width of the resulting heat seal is set by the angle α and the supplied amount of energy. Since the projecting end will be cut by the ridge 50, the welding surface of block 42a has been designed by prevent or at least limit the formation of a heat sealing region on the other side of the ridge 50. To this end, the welding surface of block 42a comprises a rearward surface portion 54 that extends from the ridge 50 and faces away from the front surface 52, where the surface portion 54 is arranged with an angle to the alignment plane AP that is smaller than the angle α. In the illustrated example, the angle of the surface portion 54 is zero or substantially zero. A connecting surface portion 55 extends from the rearward surface portion 54 to a rear surface 56 of block 42a and may be planar, as shown. The vertical distance between the connecting surface portion 55 and the welding surface 53 is preferably set to prevent or at least limit heat sealing therebetween.

The embodiment in FIGS 8A-8B implements an underlying principle of configuring the welding surfaces of the blocks 42a, 42b such that the vertical spacing of the welding surfaces between the ridge 50 and the rear surface 56 exceeds the maximum vertical spacing of the welding surfaces within the heat sealing region on the other side of the ridge, i.e. from the ridge 50 towards the front surface 52. This principle, which may be implemented by other configurations of the welding surfaces, concentrates the supplied energy to the heat sealing region and thereby minimizes the required amount of energy to be supplied.

FIG. 9 is a block diagram of components that may be involved in the control of the corner finishing device 40 as exemplified in FIG. 7. A controller 100 comprises an input interface 100a for receiving a sensor signal from the position sensor 43, and an output interface 100b for supplying control signals. In the illustrated embodiment, the controller 100 is connected, via the output interface 100b, to a first driver ("textile conveyor driver") 101 for the textile work product, a second driver ("gripper translator") 102 for horizontal displacement of the gripping elements 45, a third driver 103 ("heat sealing unit translator") for horizontal displacement of the heat sealing unit 42, a generator 104 ("heat generator") for energy supply to the heat sealing unit 42, a fourth driver 105 ("block translator") for relative movement of the blocks 42a, 42b, and a fifth driver 106 ("gripper activator") for relative movement of the gripping elements 45. The respective driver may comprise suitable actuator for imparting a desired movement, for example any one of an electric motor, a stepper motor, a servo motor, a pneumatic actuator, a hydraulic actuator, etc.

The first driver 101 is operable to transport the textile work product 2 to the corner finishing device 40 and may, for example, be connected to drive the conveyor belts 41 (FIG. 5A) or any other suitable mechanism for transporting the textile work product. The second driver 102 is operable to move the gripping elements from a starting position in direction D5 and back to the starting position (FIG. 7D). The third driver 103 is operable to move the heat sealing unit 42 from a starting position in direction D2 and back to the starting position (FIG. 5B, FIG. 7A). The fourth driver 105 is operable to move at least one of the blocks 42a, 42b from a starting position in direction D3 and back to the starting position (FIG. 5C, FIG. 7B, FIG. 7E). The fifth driver 106 is operable to move at least one of the gripping elements 45 from a starting position in direction D4, D4' and back to the starting position (FIG. 7C). The generator 104 will differ depending on heat sealing technique. If the heat seal is formed by ultrasonic welding, the generator 104 is an ultrasonic generator unit comprising a power supply for generating an electric signal, and converting and boosting equipment for converting the electric signal into mechanical vibration, as is well known in the art. Within the field of ultrasonic welding, the blocks 42a, 42b are denoted horn (or sonotrode) and anvil (or nest). The horn is configured to apply the mechanical vibration to the parts being welded while being pressed against the anvil. It is understood that any one of the blocks 42a, 42b may form the horn and the anvil, respectively.

It is understood that the controller 100 may alternatively be configured to control the corner finishing device 40 as exemplified in FIG. 5. In such an example, the second and fifth drivers 102, 106 are omitted.

Further, the controller 100 may also be configured to control one or more of the binding devices 30, 32 and the trimming devices 31 of the edge binding station 13 (FIGS 3B, 3C and 3E).

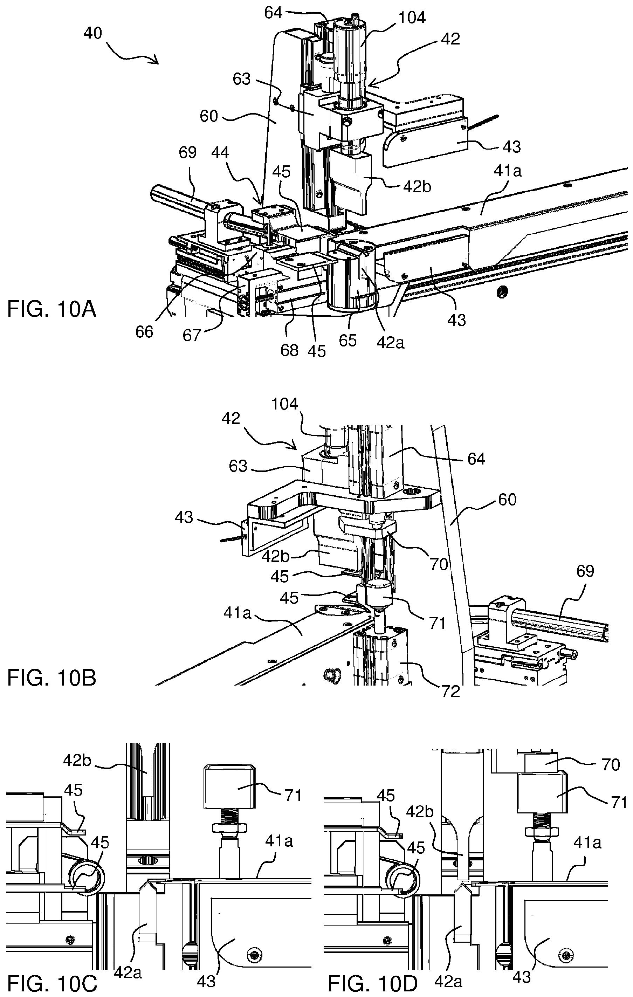

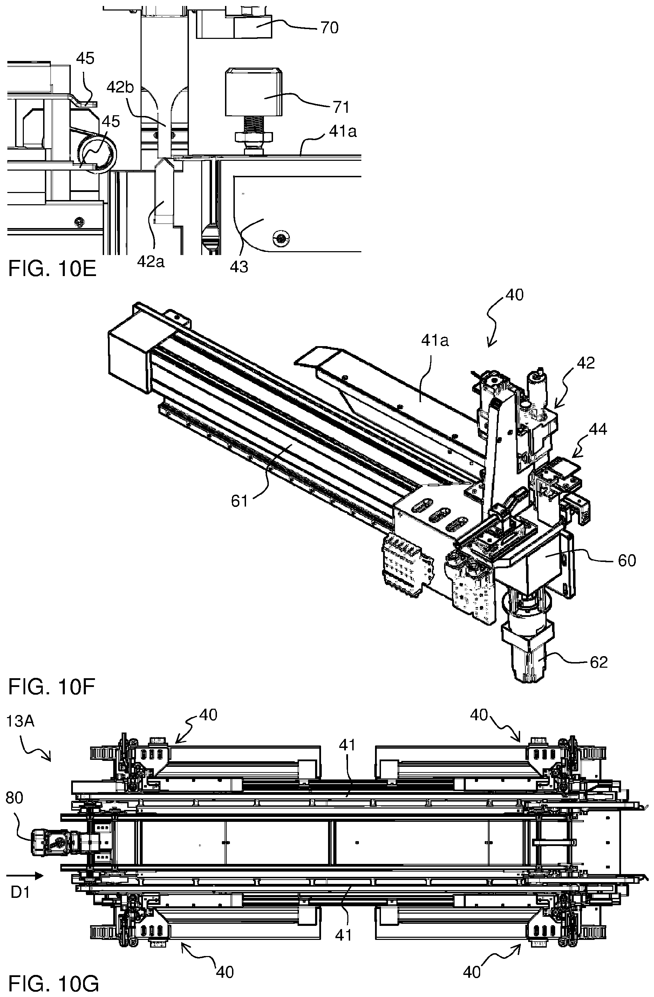

FIGS 10A-10G illustrate a corner finishing device 40 that implements the method 600 of FIG. 6. To clarify the structure and operation of the device 40, the drive belts (41 in FIG. 5) have been omitted in FIGS 10A-10F. The corner finishing device 40 comprises a frame 60, which is arranged for movement along a rail 61 (FIG. 10F). The frame 60 carries the heat sealing unit 42, the position sensor 43, the gripping unit 44 and the support 41a, which are thus moved in unison with the frame 60 along the rail 61. The rail 61 is fixed to a stand that carries the drive belts 41 and the associated mechanical transmission are arranged on a stationary stand (FIG. 10G). The movement of the frame 60 on the rail 61 is actuated by an electric motor 62, which thus implements or is part of the third driver 103 of FIG. 9. The heat sealing unit 42 comprises a holder 63 which is connected to the frame 60 for sliding motion along a vertical track. The holder 63 is fixedly connected to a horn 42b and an ultrasonic generator unit 104. The movement of the holder 63, and thus the horn 42b, along the frame 60 is actuated by a pneumatic actuator 64, which thus implements or is included in the fourth driver 105 of FIG. 9. A replaceable anvil element 42a is releasably mounted in an anvil holder 65 which is fixed to the frame 60. The position sensor parts 43 are fixedly attached to the frame 60. The gripping unit 44 comprises two gripping plates 45, of which an upper gripping plate 45 is vertically moveable by a pneumatic actuator 66, which thus implements or is part of the fifth driver 106 of FIG. 9. The gripping unit 44 is arranged for sliding motion on a horizontal portion of the frame 60, and an L-shaped element 67 of the gripping unit 44 is engaged with a pneumatic actuator 68, which thus implements or is part of the second driver 102. In the illustrated embodiment, a tubular member 69 is attached to the frame 60 and extends to the gripping unit 44. The tubular member 69 is connected for fluid communication with an evacuation device (not shown), which generates a suction force in the tubular member 69 to evacuate the projecting ends when released by the gripping unit 44 after being cut away from the textile work product.

The heat sealing unit 42 further comprises a flange 70, which is fixedly connected to the holder 63, as shown in FIG. 10B. A counter-support 71 is arranged on the frame 60 to be engaged by the flange 70 when the holder 63 is driven vertically, by the actuator 64, towards the anvil 42a. A pneumatic actuator 107 is operable to switch the counter-support 71 between a retracted position and an extended position in the vertical direction. The switching of pneumatic actuator 107 is controlled by a control signal from the controller 100 of FIG. 9. The operation of the counter-support 71 is illustrated in FIGS 10C-10E, which are elevated side views of the region of the anvil 42a and the horn 42b. In FIG. 10C, the heat sealing unit 42 is in the infeed state and the horn 42b is in an upper vertical position. The counter-support 71 has been operated into its extended position. In FIG. 10D, the heat sealing unit 42 is in the intermediate state to form the restriction slot between the horn 42b and the anvil 42a. The actuator 64 has been activated to drive the holder 63, and thus the horn 42b, vertically towards the anvil 42a, and the vertical movement has continued until the flange 70 hits the counter-support 71. Thereby, the counter-support 71 defines the height of the restriction slot with high precision. In FIG. 10E, the heat sealing unit 42 is in the sealing state. The counter-support 71 has been operated into its retracted position, and the actuator 64 is operated to drive the horn 42b against the anvil 42a with a predefined pressing force, which has been set so that a proper heat seal is formed and the projecting end 5 is cut away by the ridge on the anvil 42a. It may be noted that FIGS 10C-10E do not reproduce the movement of the gripping elements 45 during production.

FIG. 10G is a top plan view of a corner forming apparatus 13A, which comprises four corner finishing devices 40 that are arranged to process a respective corner of a textile work product. Thus, the apparatus 13A may implement the fourth processing stage depicted in FIG. 3F. The textile work product is fed into the apparatus 13A in the infeed direction D1 by drive belts 41 driven by an electric motor 80, which thus implements or is part of the first driver 101 of FIG. 9. The textile work product is moved by the drive belts 41 into the apparatus 13A, whereupon the drive belts 41 are stopped to immobilize the textile work product (cf. step 601 in FIG. 6). Each individual corner finishing device 40 is then operated to perform steps 602-604 of FIG. 6, for example as disclosed with reference to FIGS 7A-7F. When all corners have been processed, the drive belts 41 are activated to move the resulting textile product away from the apparatus 13A in the infeed direction D1, while also moving another textile work product into the apparatus 13A.

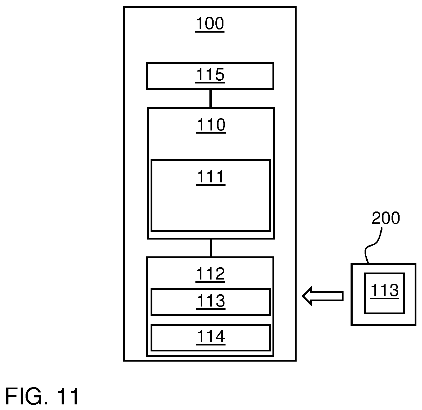

FIG. 11 is a block diagram of an exemplifying structure of the controller 100 in FIG. 9. Generally, the controller 100 may be configured to perform any of the methods described herein, or part thereof, by a combination of software and hardware circuitry, or exclusively by specific hardware circuitry. In FIG. 11, the controller 100 comprises a control circuit 110 responsible for the overall operation of the controller 100. As shown, the control circuit 110 may include a processing device or processor 111, which may be or include a central processing unit (CPU), graphics processing unit (GPU), microcontroller, microprocessor, ASIC, FPGA, or any other specific or general processing device. The processor 111 may execute instructions 113 stored in a separate storage device, such as memory 112, and/or in an internal memory (not shown) of the control circuit 110, in order to control the operation of the controller 100. The instructions 113 when executed by the processor 111 may cause the controller 100 to perform any of the methods described herein, or part thereof. The instructions 113 may be supplied to the controller 100 on a computer-readable medium 200, which may be a tangible (non-transitory) product (for example magnetic medium, optical disk, read-only memory, flash memory, etc.) or a propagating signal. As indicated in FIG. 11, the memory 112 may also store data 114 for use by the processor 111, for example one or more settings of the respective corner finishing device 40, such as timing data, supplied energy, applied force, etc. The memory 112 may comprise one or more of a buffer, a flash memory, a hard drive, a removable media, a volatile memory, a non-volatile memory, a random access memory (RAM), or another suitable data storage device. In an exemplary arrangement, the memory 112 includes a non-volatile memory for long term data storage and a volatile memory that functions as system memory for the control circuit 110. The memory 112 may exchange data with the control circuit 110 over a data bus. Accompanying control lines and an address bus between the memory 112 and the control circuit 110 also may be present. The memory 112 is considered a non-transitory computer readable medium. The controller 100 may further include a signal interface 115, which may include any conventional communication interface for wired or wireless communication. The signal interface 115 is arranged to output one or more control signals and input one or more sensor signals and may thus correspond to the interfaces 100a, 100b of FIG. 9.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the scope of the appended claims.

Further, while operations are depicted in the drawings in a particular order, this should not be understood as requiring that such operations be performed in the particular order shown or in sequential order, or that all illustrated operations be performed, to achieve desirable results.

## Claims

1. An apparatus for edge binding a textile work product (2) that has a perimeter comprising first and second edges that meet at a corner at approximately right angles, a binding tape (3) being folded around and attached to the second edge so that an end portion (5) of the binding tape (3) projects beyond the corner in a direction of the second edge, said apparatus comprising a corner finishing device (40) and a conveyor (101, 41) for engagement with the textile work product (2), and a control device (100) operatively connected to the conveyor (101, 41) and the corner finishing device (40), said control device (100) being configured to:
operate at least one of the conveyor (101, 41) and the corner finishing device (40) to arrange the textile work product (2) with the corner in alignment with the corner finishing device (40); and
operate the corner finishing device (40) to apply a heat seal to the end portion (5) at the corner and cut the end portion (5) at the heat seal to close the binding tape (3) at the corner,
wherein the corner finishing device (40) comprises a heat sealing unit (42) which is operable to form a slot with a height that is smaller than a thickness of the binding tape (3) on the second edge, wherein the control device (100) is configured to, before operating the corner finishing device (40) to apply the heat seal, operate at least one of the conveyor (101, 41) and the corner finishing device (40) to arrange the end portion (5) to extend through the heat sealing unit (42), operate the heat sealing unit (42) to form the slot with the end portion (5) extending through the slot, and operate the corner finishing device (40) to pull the end portion (5) through the slot in a first direction to thereby drive the corner (2c) towards, and optionally into contact with, the slot.

2. The apparatus of claim 1, wherein the corner finishing device (40) comprises a gripping unit (45) for engaging the end portion (5).

3. The apparatus of claim 2, wherein the control device (100) is configured to operate, when the gripping unit (45) is engaged with the end portion (5), at least one of the gripping unit (45) and the heat sealing unit (42) to pull the end portion (5) in the first direction.

4. The apparatus of any preceding claim, wherein the corner finishing device (40) comprises a cutting unit (50, 53) integrated with the heat sealing unit (42), wherein the control device (100) is configured to operate the corner finishing device (40) to concurrently apply the heat seal by the heat sealing unit (42) and to cut the end portion (5) by the cutting unit (50, 53).

5. The apparatus of any preceding claim, wherein the corner finishing device (40) comprises first and second opposing blocks (42a, 42b) that define a cutting element (50) and a stop (53) for the cutting element (50), respectively, the first and second blocks (42a, 42b) being arranged for mutual movement, and wherein the control device (100) is further configured to operate an actuator (105) to mutually move the first and second blocks (42a, 42b) to form the slot between the cutting element (50) and the stop (53).

6. The apparatus of claim 5, wherein the cutting element (50) and the stop (53) are arranged to extend in a second direction at right angles to the first direction, and wherein the control device (100) is configured to operate at least one of the conveyor (101, 41) and the corner finishing device (40) to arrange the textile work product (2) with the second edge substantially parallel to the first direction and the first edge substantially extending along the cutting element (50) and the stop (53) in the second direction.

7. The apparatus of claim 5 or 6, wherein the first and second blocks (42a, 42b) comprise opposing surface portions that collectively define a heat sealing region between the first and second blocks (42a, 42b), said first and second blocks (42a, 42b) being arranged with the opposing surface portions jointly defining a tapered space when the first and second blocks (42a, 42b) have been moved to form the slot between the cutting element (50) and the stop (53), and wherein the corner is received in the tapered space when the corner is driven towards the slot.

8. The apparatus of claim 7, wherein the cutting element is defined by a ridge (50) in a top surface of the first block (42a) facing the second block (42b), the top surface comprising one of said opposing surface portions, which is arranged with a first angle (α) to an alignment plane (AP) of the first and second blocks (42a, 42b) and extends from the ridge (50) towards a front surface (52) of the first block (42a) facing the textile work product (2), the top surface further comprising a rearward surface portion (54) which extends from the ridge (50) and faces away from the front surface (52), said rearward surface portion (54) being arranged with a second angle to the alignment plane (AP), the second angle being smaller than the first angle (α).

9. The apparatus of any preceding claim, further comprising an edge binding device (32), wherein the control device (100) is configured to operate the edge binding device (32) to attach the binding tape (3) to the second edge so that the end portion (5) of the binding tape (5) projects beyond the corner in the direction of the second edge, and wherein the control device (100) is further configured to, before operating the edge binding device (32) to attach the binding tape to the second edge, operate the edge binding device (32), or a further edge binding device (30, 31), to attach a further binding tape (3) to the first edge so that an end portion (5) of the further binding tape (3) is level with the corner in a direction of the first edge.

10. A method of edge binding a textile work product having a perimeter comprising first and second edges that meet at a corner at approximately right angles, a binding tape being folded around and attached to the second edge so that an end portion of the binding tape projects beyond the corner in a direction of the second edge, said method comprising:
arranging (404) the textile work product with the corner in alignment with a corner finishing device; and
operating (405; 604) the corner finishing device to apply a heat seal to the end portion at the corner and cut the end portion at the heat seal to close the binding tape at the corner,
wherein said arranging (404) comprises: arranging (601) the end portion to extend through a heat sealing unit of the corner finishing device; operating (602) the heat sealing unit to form a slot with the end portion extending through the slot, a height of said slot being smaller than a thickness of the binding tape on the second edge; and pulling (603) the end portion through the slot in a first direction to thereby drive the corner towards, and optionally into contact with, the slot.

11. The method of claim 10, wherein said pulling (603) comprises: operating a gripping unit to engage the end portion, and operating at least one of the gripping unit and the heat sealing unit to pull the end portion in the first direction.

12. The method of claim 10 or 11, wherein the corner finishing device comprises a cutting unit integrated with the heat sealing unit, and wherein said operating (405; 604) the corner finishing device to apply the heat seal comprises: operating (604) the corner finishing device to concurrently apply the heat seal by the heat sealing unit and cut the end portion by the cutting unit.

13. The method of any one of claims 10-12, wherein the corner finishing device comprises first and second opposing blocks that are mutually moveable and define a cutting element and a stop for the cutting element, respectively, and wherein said operating (602) the heat sealing unit to form the slot comprises: mutually moving the first and second blocks to form the slot between the cutting element and the stop.

14. The method of claim 13, wherein the cutting element and the stop are arranged to extend in a second direction at right angles to the first direction, and wherein said arranging (404; 601) the textile work product comprises: arranging (404; 601) the textile work product with the second edge substantially parallel to the first direction and the first edge substantially extending along the cutting element and the stop in the second direction.

15. The method of claim 13 or 14, wherein the first and second blocks comprise opposing surface portions that collectively define a heat sealing region between the first and second blocks, wherein said operating (602) the heat sealing unit to form the slot causes the opposing surface portions to jointly define a tapered space, and wherein said pulling (603) the end portion in the first direction causes the corner to be received in the tapered space.

## Patentansprüche

1. Einrichtung zur Kanteneinfassung eines textilen Arbeitsprodukts (2) mit einem Umfang, der eine erste und eine zweite Kante umfasst, die sich an einer Ecke in annähernd rechten Winkeln treffen, wobei ein Einfassband (3) um die zweite Kante gefaltet und an dieser befestigt ist, so dass ein Endabschnitt (5) des Einfassbandes (3) über die Ecke in Richtung der zweiten Kante vorsteht, wobei die Einrichtung eine Eckennachbearbeitungsvorrichtung (40) und einen Förderer (101, 41) zum Eingriff mit dem textilen Arbeitsprodukt (2) und eine Steuervorrichtung (100) umfasst, die mit dem Förderer (101, 41) und der Eckennachbearbeitungsvorrichtung (40) wirkverbunden ist, wobei die Steuervorrichtung (100) zu Folgendem ausgelegt ist:
Betreiben des Förderers (101, 41) und/oder der Eckennachbearbeitungsvorrichtung (40), um das textile Arbeitsprodukt (2) derart anzuordnen, dass die Ecke mit der Eckennachbearbeitungsvorrichtung (40) ausgerichtet ist; und
Betreiben der Eckennachbearbeitungsvorrichtung (40), um eine Heißversiegelung auf den Endabschnitt (5) an der Ecke aufzubringen und den Endabschnitt (5) an der Heißversiegelung abzuschneiden, um das Einfassband (3) an der Ecke zu verschließen,
wobei die Eckennachbearbeitungsvorrichtung (40) eine Heißversiegelungseinheit (42) umfasst, die dazu betreibbar ist, einen Schlitz mit einer Höhe auszubilden, die kleiner als eine Dicke des Einfassbandes (3) auf der zweiten Kante ist, wobei die Steuervorrichtung (100) dazu ausgelegt ist, vor Betreiben der Eckennachbearbeitungsvorrichtung (40), um die Heißversiegelung aufzubringen, den Förderer (101, 41) und/oder die Eckennachbearbeitungsvorrichtung (40) zu betreiben, um den Endabschnitt (5) derart anzuordnen, dass er sich durch die Heißversiegelungseinheit (42) erstreckt, die Heißversiegelungseinheit (42) zu betreiben, um den Schlitz auszubilden, wobei sich der Endabschnitt (5) durch den Schlitz erstreckt, und die Eckennachbearbeitungsvorrichtung (40) zu betreiben, um den Endabschnitt (5) in einer ersten Richtung durch den Schlitz zu ziehen, um dadurch die Ecke (2c) zu dem Schlitz hin und optional in einen Kontakt mit diesem anzutreiben.

2. Einrichtung nach Anspruch 1, wobei die Eckennachbearbeitungsvorrichtung (40) eine Greifeinheit (45) zum Eingreifen in den Endabschnitt (5) umfasst.

3. Einrichtung nach Anspruch 2, wobei die Steuervorrichtung (100) dazu ausgelegt ist, wenn die Greifeinheit (45) mit dem Endabschnitt (5) in Eingriff steht, die Greifeinheit (45) und/oder die Heißversiegelungseinheit (42) zu betreiben, um den Endabschnitt (5) in die erste Richtung zu ziehen.

4. Einrichtung nach einem der vorhergehenden Ansprüche, wobei die Eckennachbearbeitungsvorrichtung (40) eine Schneideeinheit (50, 53) umfasst, die in die Heißversiegelungseinheit (42) integriert ist, wobei die Steuervorrichtung (100) dazu ausgelegt ist, die Eckennachbearbeitungsvorrichtung (40) zu betreiben, um gleichzeitig die Heißversiegelung durch die Heißversiegelungseinheit (42) aufzubringen und den Endabschnitt (5) durch die Schneideeinheit (50, 53) abzuschneiden.

5. Einrichtung nach einem der vorhergehenden Ansprüche, wobei die Eckennachbearbeitungsvorrichtung (40) einen ersten und einen zweiten gegenüberliegenden Block (42a, 42b) umfasst, die ein Schneidelement (50) bzw. einen Anschlag (53) für das Schneidelement (50) definieren, wobei der erste und der zweite Block (42a, 42b) zur wechselseitigen Bewegung angeordnet sind, und wobei die Steuervorrichtung (100) ferner dazu ausgelegt ist, einen Aktuator (105) zu betreiben, um den ersten und den zweiten Block (42a, 42b) wechselseitig zu bewegen, um den Schlitz zwischen dem Schneidelement (50) und dem Anschlag (53) auszubilden.

6. Einrichtung nach Anspruch 5, wobei das Schneidelement (50) und der Anschlag (53) derart angeordnet sind, dass sie sich in einer zweiten Richtung in rechten Winkeln zu der ersten Richtung erstrecken, und wobei die Steuervorrichtung (100) dazu ausgelegt ist, den Förderer (101, 41) und/oder die Eckennachbearbeitungsvorrichtung (40) zu betreiben, um das textile Arbeitsprodukt (2) derart anzuordnen, dass die zweite Kante im Wesentlichen parallel zu der ersten Richtung steht und sich die erste Kante im Wesentlichen entlang des Schneidelements (50) und des Anschlags (53) in der zweiten Richtung erstreckt.

7. Einrichtung nach Anspruch 5 oder 6, wobei der erste und der zweite Block (42a, 42b) gegenüberliegende Oberflächenabschnitte umfassen, die gemeinsam einen Heißversiegelungsbereich zwischen dem ersten und dem zweiten Block (42a, 42b) definieren, wobei der erste und der zweite Block (42a, 42b) derart angeordnet sind, dass die gegenüberliegenden Oberflächenabschnitte zusammenwirkend einen sich verjüngenden Raum definieren, wenn der erste und der zweite Block (42a, 42b) bewegt wurden, um den Schlitz zwischen dem Schneidelement (50) und dem Anschlagelement (53) auszubilden, und wobei die Ecke in dem sich verjüngenden Raum aufgenommen wird, wenn die Ecke zu dem Schlitz hin angetrieben wird.

8. Einrichtung nach Anspruch 7, wobei das Schneidelement durch eine Erhöhung (50) in einer oberen Oberfläche des ersten Blocks (42a) definiert ist, die dem zweiten Block (42b) zugewandt ist, wobei die obere Oberfläche einen der gegenüberliegenden Oberflächenabschnitte umfasst, der in einem ersten Winkel (α) zu einer Ausrichtungsebene (AP) des ersten und des zweiten Blocks (42a, 42b) angeordnet ist und sich von der Erhöhung (50) zu einer dem textilen Arbeitsprodukt (2) zugewandten vorderen Oberfläche (52) des ersten Blocks (42a) hin erstreckt, wobei die obere Oberfläche ferner einen hinteren Oberflächenabschnitt (54) umfasst, der sich von der Erhöhung (50) erstreckt und von der vorderen Oberfläche (52) abgewandt ist, wobei der hintere Oberflächenabschnitt (54) in einem zweiten Winkel zu der Ausrichtungsebene (AP) angeordnet ist, wobei der zweite Winkel kleiner als der erste Winkel (α) ist.

9. Einrichtung nach einem der vorhergehenden Ansprüche, die ferner eine Kanteneinfassungsvorrichtung (32) umfasst, wobei die Steuervorrichtung (100) dazu ausgelegt ist, die Kanteneinfassungsvorrichtung (32) zu betreiben, um das Einfassband (3) an der zweiten Kante zu befestigen, so dass der Endabschnitt (5) des Einfassbandes (5) über die Ecke in Richtung der zweiten Kante vorsteht, und wobei die Steuervorrichtung (100) ferner dazu ausgelegt ist, vor Betreiben der Kanteneinfassungsvorrichtung (32), um das Einfassband an der zweiten Kante zu befestigen, die Kanteneinfassungsvorrichtung (32) oder eine weitere Kanteneinfassungsvorrichtung (30, 31) zu betreiben, um ein weiteres Einfassband (3) an der ersten Kante zu befestigen, so dass ein Endabschnitt (5) des weiteren Einfassbandes (3) in Richtung der ersten Kante mit der Ecke eben ist.

10. Verfahren zur Kanteneinfassung eines textilen Arbeitsprodukts mit einem Umfang, der eine erste und eine zweite Kante umfasst, die sich an einer Ecke in annähernd rechten Winkeln treffen, wobei ein Einfassband um die zweite Kante gefaltet und an dieser befestigt wird, so dass ein Endabschnitt des Einfassbandes über die Ecke in Richtung der zweiten Kante vorsteht, wobei das Verfahren Folgendes umfasst:
Anordnen (404) des textilen Arbeitsprodukts derart, dass die Ecke mit einer Eckennachbearbeitungsvorrichtung ausgerichtet ist; und
Betreiben (405; 604) der Eckennachbearbeitungsvorrichtung, um eine Heißversiegelung auf den Endabschnitt an der Ecke aufzubringen und den Endabschnitt an der Heißversiegelung abzuschneiden, um das Einfassband an der Ecke zu verschließen,
wobei das Anordnen (404) Folgendes umfasst: Anordnen (601) des Endabschnitts derart, dass er sich durch eine Heißversiegelungseinheit der Eckennachbearbeitungsvorrichtung erstreckt; Betreiben (602) der Heißversiegelungseinheit, um einen Schlitz auszubilden, wobei sich der Endabschnitt durch den Schlitz erstreckt, wobei eine Höhe des Schlitzes kleiner als eine Dicke des Einfassbandes auf der zweiten Kante ist; und Ziehen (603) des Endabschnitts durch den Schlitz in einer ersten Richtung, um dadurch die Ecke zu dem Schlitz hin und optional in einen Kontakt mit diesem anzutreiben.

11. Verfahren nach Anspruch 10, wobei das Ziehen (603) Folgendes umfasst: Betreiben einer Greifeinheit, um in den Endabschnitt einzugreifen, und Betreiben der Greifeinheit und/oder der Heißversiegelungseinheit, um den Endabschnitt in die erste Richtung zu ziehen.

12. Verfahren nach Anspruch 10 oder 11, wobei die Eckennachbearbeitungsvorrichtung eine Schneideeinheit umfasst, die in die Heißversiegelungseinheit integriert ist, und wobei das Betreiben (405; 604) der Eckennachbearbeitungsvorrichtung, um die Heißversiegelung aufzubringen, Folgendes umfasst: Betreiben (604) der Eckennachbearbeitungsvorrichtung, um gleichzeitig die Heißversiegelung durch die Heißversiegelungseinheit aufzubringen und den Endabschnitt durch die Schneideeinheit abzuschneiden.

13. Verfahren nach einem der Ansprüche 10-12, wobei die Eckennachbearbeitungsvorrichtung einen ersten und einen zweiten gegenüberliegenden Block umfasst, die wechselseitig beweglich sind und ein Schneidelement bzw. einen Anschlag für das Schneidelement definieren, und wobei das Betreiben (602) der Heißversiegelungseinheit, um den Schlitz auszubilden, Folgendes umfasst: wechselseitiges Bewegen des ersten und des zweiten Blocks, um den Schlitz zwischen dem Schneidelement und dem Anschlag auszubilden.

14. Verfahren nach Anspruch 13, wobei das Schneidelement und der Anschlag derart angeordnet werden, dass sie sich in einer zweiten Richtung in rechten Winkeln zu der ersten Richtung erstrecken, und wobei das Anordnen (404; 601) des textilen Arbeitsprodukts Folgendes umfasst: Anordnen (404; 601) des textilen Arbeitsprodukts derart, dass die zweite Kante im Wesentlichen parallel zu der ersten Richtung steht und sich die erste Kante im Wesentlichen entlang des Schneidelements und des Anschlags in der zweiten Richtung erstreckt.

15. Verfahren nach Anspruch 13 oder 14, wobei der erste und der zweite Block gegenüberliegende Oberflächenabschnitte umfassen, die gemeinsam einen Heißversiegelungsbereich zwischen dem ersten und dem zweiten Block definieren, wobei das Betreiben (602) der Heißversiegelungseinheit, um den Schlitz auszubilden, bewirkt, dass die gegenüberliegenden Oberflächenabschnitte zusammenwirkend einen sich verjüngenden Raum definieren, und wobei das Ziehen (603) des Endabschnitts in der ersten Richtung bewirkt, dass die Ecke in dem sich verjüngenden Raum aufgenommen wird.

## Revendications

1. Appareil de bordage d'un produit de travail textile (2) qui a un périmètre comprenant des premier et second bords qui se rejoignent à un coin à angle approximativement droit, un ruban de liage (3) étant plié autour du second bord, et attaché à celui-ci, de telle sorte qu'une partie d'extrémité (5) du ruban de liage (3) fait saillie au-delà du coin dans une direction du second bord, ledit appareil comprenant un dispositif de finition de coin (40) et un transporteur (101, 41) destiné à entrer en prise avec le produit de travail textile (2), et un dispositif de commande (100) fonctionnellement connecté au transporteur (101, 41) et au dispositif de finition de coin (40), ledit dispositif de commande (100) étant configuré pour :
mettre en fonctionnement au moins un du transporteur (101, 41) et du dispositif de finition de coin (40) pour agencer le produit de travail textile (2) avec le coin en alignement avec le dispositif de finition de coin (40) ; et
mettre en fonctionnement le dispositif de finition de coin (40) pour appliquer un thermocollage sur la partie d'extrémité (5) au niveau du coin et couper la partie d'extrémité (5) au niveau du thermocollage pour fermer le ruban de liage (3) au niveau du coin,
dans lequel le dispositif de finition de coin (40) comprend une unité de thermocollage (42) qui peut être mise en fonctionnement pour former une ouverture avec une hauteur qui est plus petite qu'une épaisseur du ruban de liage (3) sur le second bord, dans lequel le dispositif de commande (100) est configuré pour, avant de mettre en fonctionnement le dispositif de finition de coin (40) pour appliquer le thermocollage, mettre en fonctionnement au moins un du transporteur (101, 41) et du dispositif de finition de coin (40) pour agencer la partie d'extrémité (5) pour s'étendre à travers l'unité de thermocollage (42), mettre en fonctionnement l'unité de thermocollage (42) pour former l'ouverture avec la partie d'extrémité (5) s'étendant à travers l'ouverture, et mettre en fonctionnement le dispositif de finition de coin (40) pour tirer la partie d'extrémité (5) à travers l'ouverture dans une première direction pour ainsi entraîner le coin (2c) vers, et facultativement en contact avec, l'ouverture.

2. Appareil de la revendication 1, dans lequel le dispositif de finition de coin (40) comprend une unité de préhension (45) destinée à entrer en prise avec la partie d'extrémité (5).

3. Appareil de la revendication 2, dans lequel le dispositif de commande (100) est configuré pour mettre en fonctionnement, lorsque l'unité de préhension (45) est en prise avec la partie d'extrémité (5), au moins une de l'unité de préhension (45) et de l'unité de thermocollage (42) pour tirer la partie d'extrémité (5) dans la première direction.

4. Appareil d'une quelconque revendication précédente, dans lequel le dispositif de finition de coin (40) comprend une unité de coupe (50, 53) intégrée avec l'unité de thermocollage (42), dans lequel le dispositif de commande (100) est configuré pour mettre en fonctionnement le dispositif de finition de coin (40) pour simultanément appliquer le thermocollage par le biais de l'unité de thermocollage (42) et pour couper la partie d'extrémité (5) par le biais de l'unité de coupe (50, 53).

5. Appareil d'une quelconque revendication précédente, dans lequel le dispositif de finition de coin (40) comprend des premier et second blocs opposés (42a, 42b) qui définissent un élément de coupe (50) et une butée (53) pour l'élément de coupe (50), respectivement, les premier et second blocs (42a, 42b) étant agencés pour mouvement mutuel, et dans lequel le dispositif de commande (100) est en outre configuré pour mettre en fonctionnement un actionneur (105) pour mouvoir mutuellement les premier et second blocs (42a, 42b) pour former l'ouverture entre l'élément de coupe (50) et la butée (53).

6. Appareil de la revendication 5, dans lequel l'élément de coupe (50) et la butée (53) sont agencés pour s'étendre dans une seconde direction à angle droit relativement à la première direction, et dans lequel le dispositif de commande (100) est configuré pour mettre en fonctionnement au moins un du transporteur (101, 41) et du dispositif de finition de coin (40) pour agencer le produit de travail textile (2) avec le second bord sensiblement parallèle à la première direction et le premier bord sensiblement s'étendant le long de l'élément de coupe (50) et la butée (53) dans la seconde direction.

7. Appareil de la revendication 5 ou 6, dans lequel les premier et second blocs (42a, 42b) comprennent des parties de surface opposées qui définissent collectivement une région de thermocollage entre les premier et second blocs (42a, 42b), lesdits premier et second blocs (42a, 42b) étant agencés avec les parties de surface opposées définissant conjointement un espace effilé lorsque les premier et second blocs (42a, 42b) ont été mus pour former l'ouverture entre l'élément de coupe (50) et la butée (53), et dans lequel le coin est reçu dans l'espace effilé lorsque le coin est entraîné vers l'ouverture.

8. Appareil de la revendication 7, dans lequel l'élément de coupe est défini par une arête (50) dans une surface supérieure du premier bloc (42a) faisant face au second bloc (42b), la surface supérieure comprenant une desdites parties de surface opposées, qui est agencée avec un premier angle (α) relativement à un plan d'alignement (AP) des premier et second blocs (42a, 42b) et s'étend depuis l'arête (50) vers une surface avant (52) du premier bloc (42a) faisant face au produit de travail textile (2), la surface supérieure comprenant en outre une partie de surface arrière (54) qui s'étend depuis l'arête (50) et fait face à l'opposé de la surface avant (52), ladite partie de surface arrière (54) étant agencée avec un second angle relativement au plan d'alignement (AP), le second angle étant plus petit que le premier angle (α).

9. Appareil d'une quelconque revendication précédente, comprenant en outre un dispositif de liage de bord (32), dans lequel le dispositif de commande (100) est configuré pour mettre en fonctionnement le dispositif de liage de bord (32) pour attacher le ruban de liage (3) au second bord de telle sorte que la partie d'extrémité (5) du ruban de liage (5) fait saillie au-delà du coin dans la direction du second bord, et dans lequel le dispositif de commande (100) est en outre configuré pour, avant de mettre en fonctionnement le dispositif de liage de bord (32) pour attacher le ruban de liage au second bord, mettre en fonctionnement le dispositif de liage de bord (32), ou un dispositif de liage de bord supplémentaire (30, 31), pour attacher un ruban de liage supplémentaire (3) au premier bord de telle sorte qu'une partie d'extrémité (5) du ruban de liage supplémentaire (3) est de niveau avec le coin dans une direction du premier bord.

10. Procédé de liage de bord d'un produit de travail textile ayant un périmètre comprenant des premier et second bords qui se rejoignent à un coin à angle approximativement droit, un ruban de liage étant plié autour du second bord, et attaché à celui-ci, de telle sorte qu'une partie d'extrémité du ruban de liage fait saillie au-delà du coin dans une direction du second bord, ledit procédé comprenant :
l'agencement (404) du produit de travail textile avec le coin en alignement avec un dispositif de finition de coin ; et
la mise en fonctionnement (405 ; 604) du dispositif de finition de coin pour appliquer un thermocollage sur la partie d'extrémité au niveau du coin et couper la partie d'extrémité au niveau du thermocollage pour fermer le ruban de liage au niveau du coin,
dans lequel ledit agencement (404) comprend : l'agencement (601) de la partie d'extrémité pour s'étendre à travers une unité de thermocollage du dispositif de finition de coin ; la mise en fonctionnement (602) de l'unité de thermocollage pour former une ouverture avec la partie d'extrémité s'étendant à travers l'ouverture, une hauteur de ladite ouverture étant plus petite qu'une épaisseur du ruban de liage sur le second bord ; et le tirage (603) de la partie d'extrémité à travers l'ouverture dans une première direction pour ainsi entraîner le coin vers, et facultativement en contact avec, l'ouverture.

11. Procédé de la revendication 10, dans lequel ledit tirage (603) comprend : la mise en fonctionnement d'une unité de préhension pour entrer en prise avec la partie d'extrémité, et la mise en fonctionnement d'au moins une de l'unité de préhension et de l'unité de thermocollage pour tirer la partie d'extrémité dans la première direction.

12. Procédé de la revendication 10 ou 11, dans lequel le dispositif de finition de coin comprend une unité de coupe intégrée avec l'unité de thermocollage, et dans lequel ladite mise en fonctionnement (405; 604) du dispositif de finition de coin pour appliquer le thermocollage comprend : la mise en fonctionnement (604) du dispositif de finition de coin pour simultanément appliquer le thermocollage par le biais de l'unité de thermocollage et couper la partie d'extrémité par le biais de l'unité de coupe.

13. Procédé de l'une quelconque des revendications 10 à 12, dans lequel le dispositif de finition de coin comprend des premier et second blocs opposés qui peuvent être mutuellement mis en mouvement et définissent un élément de coupe et une butée pour l'élément de coupe, respectivement, et dans lequel ladite mise en fonctionnement (602) de l'unité de thermocollage pour former l'ouverture comprend : la mise en mouvement mutuelle des premier et second blocs pour former l'ouverture entre l'élément de coupe et la butée.

14. Procédé de la revendication 13, dans lequel l'élément de coupe et la butée sont agencés pour s'étendre dans une seconde direction à angle droit relativement à la première direction, et dans lequel ledit agencement (404 ; 601) du produit de travail textile comprend : l'agencement (404 ; 601) du produit de travail textile avec le second bord sensiblement parallèle à la première direction et le premier bord sensiblement s'étendant le long de l'élément de coupe et la butée dans la seconde direction.

15. Procédé de la revendication 13 ou 14, dans lequel les premier et second blocs comprennent des parties de surface opposées qui définissent collectivement une région de thermocollage entre les premier et second blocs, dans lequel ladite mise en fonctionnement (602) de l'unité de thermocollage pour former l'ouverture amène les parties de surface opposées à définir conjointement un espace effilé, et dans lequel ledit tirage (603) de la partie d'extrémité dans la première direction amène le coin à être reçu dans l'espace effilé.
